(19) **Europäisches Patentamt / European Patent Office / Office européen des brevets**

(11) **EP 1 386 531 B1**

(12) **EUROPÄISCHE PATENTSCHRIFT**

(45) Veröffentlichungstag und Bekanntmachung des Hinweises auf die Patenterteilung:
**27.05.2009  Patentblatt 2009/22**

(51) Int Cl.:
*A01D 41/14* *(2006.01)*

(21) Anmeldenummer: **03013582.6**

(22) Anmeldetag: **14.06.2003**

(54) **Vorrichtung und Verfahren zur Lageregelung eines Vorsatzgerätes einer landwirtschaftlichen Maschine**

Device and method for position control of an attachement of an agricultural machine

Dispositif et procédé de contrôle de position d'un adaptateur pour une machine agricole

(84) Benannte Vertragsstaaten:
**BE DE IT**

(30) Priorität: **03.08.2002  DE 10235686**

(43) Veröffentlichungstag der Anmeldung:
**04.02.2004  Patentblatt 2004/06**

(73) Patentinhaber: **CLAAS Saulgau GmbH**
**88348 Bad Saulgau (DE)**

(72) Erfinder: **Betz, Peter**
**88471 Baustetten (DE)**

(74) Vertreter: **Roth, Klaus**
**Eisele, Otten, Roth & Dobler**
**Patentanwälte**
**Grosstobeler Strasse 39**
**88276 Ravensburg / Berg (DE)**

(56) Entgegenhaltungen:
EP-A- 1 167 095          EP-A- 1 356 729
US-A- 4 594 840          US-A- 5 704 200
US-A- 5 794 421

**EP 1 386 531 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Vorrichtung und ein Verfahren zur Lageregelung eines Vorsatzgerätes an landwirtschaftlichen Maschinen zur Anpassung an die Bodenkontur nach dem Oberbegriff des Anspruchs 1.

Vor allem bei Mähdreschern sind mittlerweile Vorsatzgeräte in Gebrauch, die quer zur Fahrtrichtung eine Neigungsverstellung zur Anpassung an die Bodenkontur erlauben. Die Neigungsverstellung erfolgt hierbei sensorgesteuert.

Die Druckschrift DE 37 31 420 beschreibt beispielhaft eine selbstfahrende Erntemaschine mit einem frontseitig angebauten Mähtisch, welcher quer zur Fahrtrichtung verschwenkbar ist.

Die Druckschrift DE 38 07 610 beschreibt ebenfalls einen solchen Mähdrescher, wobei gruppenweise mehrere Bodenabtaster jeweils beidseitig am Mähtisch angeordnet sind. Die Schnitthöhenregelung wird hierbei zu einem überwiegenden Teil aus einem Bodendrucksignal des Mähtisches und zu einem geringen Teil aus dem Mittelwert der Bodenabtaster gewonnen.

Die Messung an der Seite des Vorsatzgerätes bringt jedoch den Nachteil mit sich, dass Bodenerhebungen, die sich zwischen den beidseits angeordneten Sensoren befinden, bei der Lageeinstellung des Vorsatzgerätes keine Berücksichtigung finden können. Hierdurch kann es insbesondere bei stark kupiertem Gelände aufgrund der nicht ausreichenden Steuerung des Vorsatzgerätes zu einer ungleichmäßigen Schnitthöhe und gegebenenfalls sogar zum Bodenkontakt kommen.

Aufgabe der Erfindung ist es daher, eine Vorrichtung und ein Verfahren vorzuschlagen, mittels denen eine verbesserte Einstellung der Lage und insbesondere der Neigung des Vorsatzgerätes möglich ist.

Diese Aufgabe wird ausgehend von einer Vorrichtung gemäß dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass mehrere, d.h. wenigstens drei Abstandssensoren vorgesehen sind, die über die Breite des Vorsatzgerätes, d.h. quer zur Fahrtrichtung verteilt angeordnet sind. Mit Hilfe einer solchen Sensoranordnung ist es möglich, Bodenkonturen unterhalb des Vorsatzgerätes und nicht nur beidseits zu erfassen und bei der Lageeinstellung des Vorsatzgerätes zu berücksichtigen. Mit Hilfe einer entsprechenden Steuerungs- und/oder Regeleinheit, im Folgenden Kontrolleinheit genannt, ist demnach eine Lageeinstellung des Vorsatzgerätes möglich, mit der eine gleichmäßigere Schnitthöhe unter Vermeidung von Bodenkontakt möglich ist.

Erfindungsgemäß wird mittels einer von den gemessenen Bodenabstandswerten abhängigen mathematischen Kontrollfunktion eine Kontrollgröße berechnet, anhand derer die gewünschte Ausrichtung und Lage des Vorsatzgerätes zu bestimmen ist. Eine solche Kontrollfunktion kann in einer einfachen Ausführung z.B. eine Mittelwertberechnung beinhalten, wobei der Mittelwert die Kontrollgröße darstellt, anhand derer die Lage und Ausrichtung des Vorsatzgerätes gesteuert und/oder geregelt wird. Auch eine Ausgleichs- oder Regressionsrechnung wäre möglich, bei der sich beispielsweise die Steigung einer Regressionsgeraden errechnen lässt, die unmittelbar zur Einstellung der Neigung zu verwenden ist.

In einer verbesserten und daher besonders vorteilhaften Ausführungsform der Erfindung wird als Kontrollfunktion eine mathematische Funktion gewählt, die den Bodenabstand abhängig vom Ort bzw. von dem Weg zwischen den Sensoren zumindest näherungsweise angibt. Aus einer solchen mathematischen Funktion, die sich über die gesamte Breite des Vorsatzgerätes erstrecken kann, kann mit einer geeigneten, beispielhaft nachfolgend näher beschriebenen Methode eine Kontrollgröße ermittelt werden.

Eine solche Kontrollfunktion wird vorteilhafterweise durch Interpolation zwischen den Ortskoordinaten mittels den Bodenabstandswerten der einzelnen Sensoren als Stützstellen gebildet. Eine Interpolation unter Verwendung der Sensordaten als Stützstellen gibt die Gewähr dafür, dass die Kontrollfunktion ein möglichst wirklichkeitsgetreues Abbild der tatsächlichen Bodenkontur darstellt.

Eine solche Interpolation kann beispielsweise in einer einfachen Ausführungsform durch lineare Interpolation zwischen den einzelnen Stützstellen vorgenommen werden, d.h. die Funktionswerte der einzelnen Stützstellen werden durch Geraden verbunden.

Eine andere Möglichkeit besteht beispielsweise darin, eine Polynominterpolation oder eine Interpolation mit sogenannten Spline-Funktionen vorzunehmen. Mit Hilfe solcher mathematischer Verfahren lassen sich Funktionen bestimmen, die keinen Knick aufweisen. Im mathematischen Sinne spricht man von stetig differenzierbaren Funktionen. Insbesondere die Spline-Funktionen sollten hierbei ein besonders realitätsnahes Abbild der Bodenkontur ergeben, da auch hier die Kontrollfunktion ähnlich wie bei der linearen Interpolation durch einzelne, jeweils zwischen den Stützstellen geltenden Funktionen zusammengesetzt wird, wobei im Unterschied zur linearen Interpolation die Besonderheit vorliegt, dass die so aneinander gesetzten Funktionen an den Stützstellen die gleiche Steigung aufweisen.

Die genannten Kontrollfunktionen sind nur beispielhaft erwähnt. Grundsätzlich kann an dieser Stelle eine beliebige Interpolation anhand gängiger oder künftiger mathematischer Modelle durchgeführt werden, wobei als Ziel eine möglichst realitätsnahe Abbildung der Bodenkontur auch zwischen den einzelnen Stützstellen zu beachten ist.

In einer einfachen und daher mit vergleichsweise wenig Aufwand realisierbaren Ausführungsform wird die Kontrollfunktion als eindimensionale Funktion abhängig vom Weg zwischen den Sensoren bestimmt. Hierbei ist es besonders günstig, wenn die Sensoren entlang einer Geraden quer zur Fahrtrichtung am Vorsatzgerät angebracht sind, da sich hierbei, wie anhand des Ausführungsbeispiels weiter unten erläutert wird, eine besonders einfache Möglichkeit zur Bestimmung der Neigung des Vorsatzgerätes ergibt. Grundsätzlich ist jedoch auch eine anderweitige Sensoranordnung, beispielsweise in Zickzackform denkbar, so dass beispielsweise auch quer zur Fahrtrichtung verlaufenden kleinere Bodenwellen Berücksichtigung finden können. Eine eindimensionale Kontrollfunktion kann problemlos auch in einem solchen Fall entlang dem Weg zwischen den Sensoren erstellt werden.

Vorzugsweise wird im Falle einer solchen eindimensionalen Kontrollfunktion eine Fläche unterhalb bzw. oberhalb dieser Funktion berechnet. Die ausgewählte Fläche hängt von der Art der Darstellung der Kontrollfunktion ab. Sofern lediglich die Bodenabstandswerte über die Ortskoordinaten der Sensoren am Vorsatzgerät aufgetragen werden, so befindet sich in dem Fall die maßgebliche Fläche unterhalb der hierdurch gebildeten Kontrollfunktion.

In einer bevorzugten Ausführungsform wird die Neigung des Vorsatzgerätes durch eine Gerade innerhalb eines Koordinatensystems dargestellt und die gemessenen Abstandswerte von dieser Geraden abgezogen. Hierdurch ergibt sich ein Abbild der Bodenkontur, d.h. eine zwischen den gemessenen Bodenabstandswerten interpolierte Bodenkontur mit einem darüber liegenden mittels einer Geraden angedeuteten Vorsatzgerät. In diesem Fall dient als Kontrollgröße die Fläche zwischen der im Nachfolgenden Vorsatzgeraden genannten Geraden, die die Neigung des Vorsatzgerätes darstellt, und der interpolierten Kontrollfunktion, die als Ersatz für die tatsächliche Bodenkontur verwendet wird.

Die Kontrollgröße, d.h. im eindimensionalen Fall die Fläche, die als Kontrollgröße herangezogen wird, wird vorteilhafterweise durch Integration ermittelt. Die mathematische Integration bietet den Vorteil, dass die hierfür in der Steuerung bzw. Auswerteeinheit vorzusehenden Algorithmen allgemein formuliert werden können und somit ohne weiteres auf eine beliebig erweiterbare Anzahl und Anordnung von Stützstellen bzw. auf eine beliebig erweiterbare Anzahl und Anordnung von Abstandssensoren anwendbar sind.

Grundsätzlich kann eine entsprechende Lagesteuerung des Vorsatzgerätes auch mit Hilfe einer zweidimensionalen Kontrollfunktion abhängig von den jeweiligen Ortskoordinaten der Sensoren vorgenommen werden. Die Bestimmung der Kontrollfunktion kann hierbei unmittelbar dem vorbeschriebenen eindimensionalen Beispiel entsprechen. Anstelle einer linearen Interpolation zwischen zwei gemessenen Abstandswerten können z.B. Ebenen zwischen jeweils drei Stützstellen gelegt werden. Es können zweidimensionale Polynome oder Spline-Funktionen oder sonstige mathematische Modelle zur Abbildung der zweidimensionalen Bodenkontur durch eine Kontrollfunktion angewandt werden. In diesem Fall wäre als Kontrollgröße anstelle der Fläche unterhalb bzw. oberhalb der Kontrollfunktion das entsprechende Volumen heranzuziehen, das wiederum in allgemeiner Form durch eine zweidimensionale Integration bestimmbar ist. Anstelle der Vorsatzgeraden kann hierbei eine Vorsatzebene verwendet werden, die der Arbeitsebene eines Vorsatzgerätes entspricht.

Eine solche zweidimensionale Steuerung ist dementsprechend dann sinnvoll, wenn das Vorsatzgerät tatsächlich eine nennenswerte Arbeitsebene mit einer gewissen Ausdehnung in Fahrtrichtung und nicht nur in Querrichtung aufweist und zugleich neben der Verstellung der Höhe und der Querneigung auch eine Steuerung der Längsneigung möglich ist. Für solche landwirtschaftliche Maschinen ergibt sich durch die Anwendung einer solchen zweidimensionalen Kontrollfunktion in der Tat eine Verbesserung der Bodenkopie.

Bei herkömmlichen Mähwerken, bei denen in der Regel der tiefste Arbeitsbereich keine größere Ausdehnung in Fahrtrichtung aufweist, wird sich in der Regel eine solche zweidimensionale Berechnung für die Steuerung der Neigung des Vorsatzgerätes erübrigen, da eine zusätzliche Anpassung der Neigung in Längsrichtung keine wesentliche Verbesserung des Arbeitsergebnisses, jedoch einen deutlich größeren Aufwand mit sich bringt.

Für Vorsatzgeräte mit einer gewissen Längenausdehnung einer Arbeitsebene in Längsrichtung kann jedoch eine Neigungsverstellung in Längsrichtung in Verbindung mit der entsprechenden Verteilung von Bodenabstandssensoren in Querund in Längsrichtung durchaus von Vorteil sein.

Im Übrigen ist eine erfindungsgemäße Vorrichtung bzw. die einzelnen Anwendungen des entsprechenden Verfahrens nicht nur bei Erntemaschinen, sondern beispielsweise auch bei Bodenbearbeitungsgeräten denkbar, die zunehmend auch als Vorsatzgeräte ausgeführt sind.

In einer besonderen Ausführung hat es sich hierbei bewährt, die Kontrollgröße bzw. die oben angeführte Fläche, für die Soll-Position des Vorsatzgerätes so zu bestimmen, dass diese minimiert ist. Dies hat zu sehr guten Ergebnissen im Sinne der erfindungsgemäßen Aufgabe, d.h. im Hinblick auf eine gleichmäßige Schnitthöhe ohne Bodenkontakt geführt. Im zweidimensionalen Fall wäre dementsprechend das Volumen, das sich insbesondere durch entsprechende Integration bestimmen lässt, ebenfalls zu minimieren. Die Soll-Position kann auch so bestimmt werden, dass die Kontrollgröße einen vorgegebenen Wert wenigstens näherungsweise erreicht.

Ein Ausführungsbeispiel der Erfindung ist in der Zeichnung dargestellt und wird anhand der Figuren nachfolgend näher erläutert.

Im Einzelnen zeigen

Figur 1 eine Darstellung gemessener Bodenabstände mit Regelfunktion und Vorsatzgeraden,

Figur 2 eine Darstellung gemäß Figur 1 mit anderen Werten und

Figur 3 eine entsprechende Darstellung gemäß den Figuren 1 und 2 mit einer stetig differenzierbaren Kontrollfunktion.

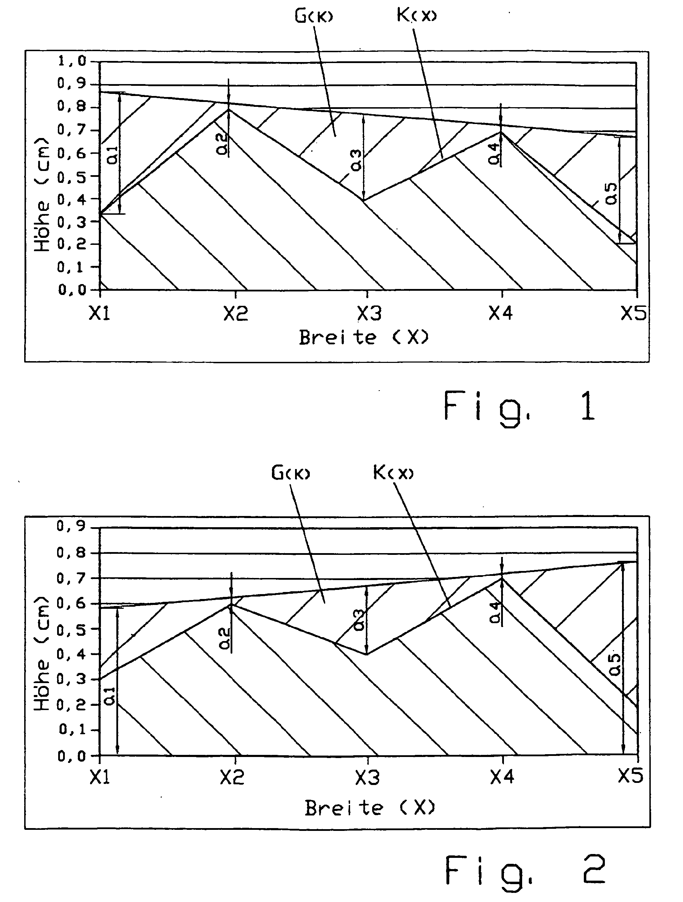

In den Figuren 1 bis 3 ist die Position $x_1$ bis $x_5$ von fünf Sensoren über die Breite x eines Vorsatzgerätes, beispielsweise eines Mähwerks für einen Mähdrescher dargestellt. Die sogenannte Vorsatzgerade V(x) entspricht dabei einer Geraden, die die Lage und Neigung des Vorsatzgerätes in Querrichtung beschreibt. Sofern die Sensoren 1 bis 5 tatsächlich entlang einer Geraden am Vorsatzgerät angebracht sind, entspricht die Vorsatzgerade der tatsächlichen Querneigung des Vorsatzgerätes. Falls die Sensoren in Längsrichtung, d.h. in Fahrtrichtung versetzt zueinander angeordnet sind, so kann die Vorsatzgerade V z.B. der Steigung einer entsprechenden Ebene, in der sich die Sensoren befinden, in Querrichtung entsprechen.

Das beschriebene Ausführungsbeispiel geht jedoch von gerade zueinander angeordneten Sensoren $x_1$ bis $x_5$ aus. Die entsprechenden Abstandswerte $a_1$ bis $a_5$ entsprechen den mit den Bodenabstandssensoren gemessenen Werten.

Die Höhenwerte im Bereich der einzelnen Sensoren sind in den Figuren 1 und 2 durch Geraden, d.h. durch lineare Interpolation miteinander verbunden. Somit ergibt sich ein angenähertes Bodenprofil im Bezug auf eine waagrechte x-Achse. Dieses durch lineare Interpolation angenäherte Bodenprofil stellt die Kontrollfunktion K(x) dar.

Die Kontrollgröße in dem dargestellten Ausführungsbeispiel ergibt sich durch die Fläche zwischen der Kontrollfunktion K(x) und der Vorsatzgeraden V(x). Diese ist auf einfache Weise zu bestimmen, indem zunächst die Gesamtfläche unter der Vorsatzgeraden bis zur x-Achse durch Integration bestimmt wird und hiervon das Integral unter der Kontrollfunktion K(x) abgezogen wird.

Die Gesamtfläche $A_V$ unter der Vorsatzgeraden über die gesamte Breite ergibt sich durch das Integral von 1 bis 5 der entsprechenden Funktion der Vorsatzgeraden folgendermaßen:

$$A_V = \int_{x_1}^{x_5} V(x)dx$$

Hiervon wird die Fläche, die durch Integration der Kontrollfunktion K(x) bestimmt wird, abgezogen. Da es sich hierbei um eine zusammengesetzte Funktion zwischen den einzelnen Stützstellen $x_1$ bis $x_5$ handelt, werden die einzelnen Integrale von $x_1$ bis $x_2$, von $x_2$ bis $x_3$, von $x_3$ bis $x_4$ und von $x_4$ bis $x_5$ bestimmt und von der Gesamtfläche $A_V$ abgezogen. Die als Kontrollgröße $G_k$ zu bestimmende Fläche zwischen der Vorsatzgeraden V(x) und der Kontrollfunktion K(x) ergibt sich demnach folgendermaßen:

$$G_k = \int_{x_1}^{x_5} V(x)dx - \int_{x_1}^{x_5} R(x)dx = \int_{x_1}^{x_5} V(x)dx - \int_{x_1}^{x_2}(m_1 x + k_1)dx \int_{x_2}^{x_3}(m_2 x + k_2)dx - \int_{x_3}^{x_4}(m_3 x + k_3)dx - \int_{x_4}^{x_5}(m_4 x + k_4)dx$$

wobei

$$m_1 = \frac{y_2 - y_1}{x_2 - x_1} \quad , \quad m_2 = \frac{y_3 - y_2}{x_3 - x_2} \quad , \qquad \text{usw.}$$

und

$$y_1 = V(x_1) - a_1 \quad , \quad y_2 = V(x_2) - a_2 \qquad \text{usw.,}$$

und $k_1$ bis $k_5$ die sogenannten Achsenabschnitte,
d.h. $k_1 = y_1 - m_1 x_1$ usw. sind.

Es ergibt sich somit für diese zu bestimmende Kontrollgröße eine Abhängigkeit von der Steigung $m_V$ der Vorsatzgeraden $V(x) = m_V x + K$. Der Minimalwert der Regelgröße $G_k$ kann bei diesem Ansatz in einer einfachen Extremwertrechnung bestimmt werden, z.B. durch die Bestimmung und Nullsetzung der Ableitung der Kontrollgröße nach der Steigung $dRg(m_V)/dm_V = 0$ und durch Auflösung nach $m_V$. Auf diese Weise lässt sich die Steigung der Vorsatzgeraden unmittelbar rechnerisch bestimmen, bei der die Kontrollgröße minimal ist.

Sofern die Soll-Lage des Vorsatzgerätes wie beschrieben berechnet und daraufhin eingestellt wird, liegt eine Steuerung des Vorsatzgerätes vor. Die Soll-Lage kann auch iterativ d.h. durch tatsächliches Verändern der Lage des Vorsatzgerätes und Überprüfung der Kontrollgröße eingestellt werden, was einer Regelung der Lage des Vorsatzgerätes bzw. von $V(x)$ entspricht.

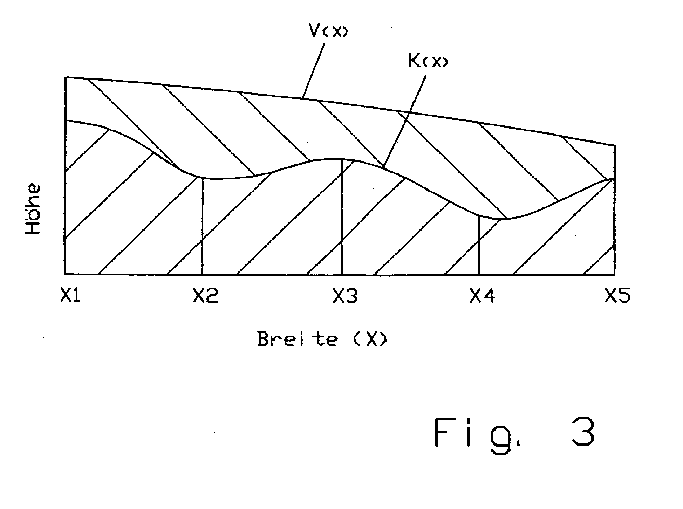

In entsprechender Weise kann bei einer Regelfunktion gemäß Figur 3 verfahren werden. Hier werden im Falle einer zusammengesetzten Kontrollfunktion $K(x)$, beispielsweise aus sogenannten einzelnen Spline-Funktionen, wiederum die einzelnen Integrale zwischen den durch die Sensorpositionen definierten Stützstellen $x_1$ bis $x_2$, $x_2$ bis $x_3$, $x_3$ bis $x_4$ und $x_4$ bis $x_5$ separat bestimmt und von der Gesamtfläche unter der Vorsatzgeraden $V(x)$ abgezogen. Im Falle einer Kontrollfunktion, die als analytische Funktion über die Gesamtbreite des Vorsatzgerätes bestimmbar ist, beispielsweise durch eine Polynominterpolation, kann die Integration der Kontrollfunktion dementsprechend in einem Schritt über die gesamte Breite des Vorsatzgerätes, d.h. von $x_1$ bis $x_5$ erfolgen.

Die verbleibende Fläche zwischen der Vorsatzgeraden $V(x)$ und der Kontrollfunktion $K(x)$ ist hierbei auf entsprechende Weise wie vorbeschrieben zu minimieren und so die Steigung und den Achsenabschnitt der idealen oder Soll-Vorsatzgeraden zu bestimmen bzw. einzustellen. Im Falle linear zueinander quer zur Fahrtrichtung angeordneter Sensoren stellt diese ideale Vorsatzgerade zugleich die tatsächliche gewünschte Querneigung des Vorsatzgerätes dar.

In dem oben genannten zweidimensionalen Fall ergäbe sich dementsprechend eine dreidimensionale Darstellung der Kontrollfunktion $K(x, y)$ mit einer darüber liegenden Vorsatzebene $V(x, y)$. Die Auswertung sowie das Auffinden der idealen Vorsatzebene kann hierbei in entsprechender Weise vorgenommen werden.

Das Vorgehen durch Flächenbestimmung mittels Integralrechnung kann in allgemeiner Form in einem Rechneralgorithmus niedergelegt werden, so dass die Anzahl und die Position der Sensoren ohne größeren Aufwand für die Steuerung des Vorsatzgerätes bzw. die Auswertung der Sensorsignale problemlos variiert werden können. Darüber hinaus ist diese Auswertung in allgemeiner Form so programmierbar, dass die gleiche Auswerte- oder Kontrolleinheit im ein- und im zweidimensionalen Fall verwendbar ist.

Vorzugsweise wird die Auswerteeinheit der Steuerung des Vorsatzgeräts vorgeschaltet. Da nach dem Auffinden der Soll-Vorsatzgeraden $V(x)$ im oben beschriebenen eindimensionalen Falle lediglich zwei Werte für die berechnete ideale Querneigung zur Einstellung der Lage des Vorsatzgerätes oder, im Falle einer Regelung zwei Werte für die aktuelle Ist-Vorsatzgerade zur Regelung der Lage des Vorsatzgerätes in einem Regelkreis übertragen werden müssen, können die bereits vorhandenen Eingänge von Steuerungen genutzt werden, die bislang lediglich zwei Sensorwerte beidseits des Vorsatzgerätes abfragen. Somit können bisherige Vorsatzgeräte und bisherige Landmaschinen ohne größeren Aufwand mit der erfindungsgemäßen Vorrichtung und Arbeitsweise aufgerüstet werden.

Als Sensoren kommen alle bekannten und zukünftigen möglichen Abstandssensoren in Frage. Bewährt haben sich hierbei sogenannte Tastbügel, da diese mit wenig Aufwand und in robuster und somit dauerhaft zuverlässiger Bauweise realisierbar sind. Grundsätzlich können jedoch auch optische oder sonstige Sensoren Verwendung finden.

Das vorbeschriebene Ausführungsbeispiel geht davon aus, dass der Arbeitsbereich des Vorsatzgerätes bzw. die Kontur des Vorsatzgerätes im Arbeitsbereich mittels einer Geraden oder Ebene gut zu beschreiben ist. Grundsätzlich lässt sich jedoch das beschriebene Verfahren auch auf Arbeitsbereiche mit beliebigen, dem Boden gegenüberliegenden Konturen des Vorsatzgerätes erweitern, indem anstelle der Vorsatzgeraden $V(x)$ oder einer Vorsatzebene $V(x, y)$ eine entsprechende Vorsatzfunktion eingesetzt wird, die die Kontur des Vorsatzgerätes wenigstens näherungsweise wiedergibt.

Um sicherzustellen, dass das oben beschriebene Verfahren mit Minimierung der Kontrollgröße nicht dazu führt, dass der oberste Punkt der Kontrollfunktion und somit die gemessene Stützstelle mit dem geringsten Bodenabstand mit der Vorsatzgeraden oder Vorsatzebene (in allgemeiner Formulierung mit der Vorsatzfunktion) in Berührung kommt, kann zudem ein Offset vorgesehen werden, der den minimalen Bodenabstand am höchsten gemessenen Punkt sicherstellt. Ein solcher Offset lässt sich rechnerisch besonders einfach berücksichtigen, indem auf die gemessenen Abstandswerte ein vorgegebener und gegebenenfalls fahrerseitig einstellbarer konstanter Wert aufaddiert wird.

Sofern die sensorisch und rechnerisch gemäß dem oben beschriebenen Verfahren ermittelte Position für das Vorsatzgerät manuell tiefergesetzt werden soll, so kann ein solcher Offset auch mit umgekehrtem Vorzeichen vorgesehen werden. Im einfachsten Fall ist dies wiederum dadurch realisierbar, dass ein konstanter Wert von den gemessenen Abstandswerten abgezogen wird.

**Patentansprüche**

1. Vorrichtung zur Lageregulierung eines Vorsatzgerätes einer landwirtschaftlichen Maschine zur Anpassung an die Bodenkontur, insbesondere für das Mähwerk einer Erntemaschine, wobei über Abstandssensoren der Abstand zum Boden erfasst und eine geregelte Neigungseinstellung des Vorsatzgerätes quer zur Fahrtrichtung vorgesehen ist, wobei wenigstens drei Abstandssensoren vorgesehen sind, die über die Breite des Vorsatzgerätes verteilt angeordnet sind, **dadurch gekennzeichnet, dass** eine Auswerteeinheit zur Auswertung der Sensorsignale vorgesehen ist, die zur Bestimmung einer Kontrollgröße ($G_K$) mittels einer von den gemessenen Bodenabstandwerten abhängigen Kontrollfunktion ($K(x)$) ausgebildet ist.

2. Vorrichtung nach einem der vorgenannten Ansprüche, **dadurch gekennzeichnet, dass** durch die Auswerteeinheit die Kontrollfunktion ($K(x)$) als mathematische Funktion des Bodenabstands abhängig vom Sensorort bestimmbar ist.

3. Vorrichtung nach einem der vorgenannten Ansprüche, **dadurch gekennzeichnet, dass** durch die Auswerteeinheit die Kontrollfunktion ($K(x)$) durch eine Interpolation mit den Orts- und Bodenabstandswerten der Sensoren als Stützstelle bestimmbar ist.

4. Vorrichtung nach einem der vorgenannten Ansprüche, **dadurch gekennzeichnet, dass** eine lineare Interpolation vorgesehen ist.

5. Vorrichtung nach einem der vorgenannten Ansprüche, **dadurch gekennzeichnet, dass** eine Polynom- und/oder Spline-Interpolation vorgesehen ist.

6. Vorrichtung nach einem der vorgenannten Ansprüche, **dadurch gekennzeichnet, dass** eine eindimensionale Kontrollfunktion ($K(x)$) abhängig vom Weg zwischen den Sensoren vorgesehen ist.

7. Vorrichtung nach einem der vorgenannten Ansprüche, **dadurch gekennzeichnet, dass** als Kontrollgröße ($G_K$)die Fläche unterhalb der Kontrollfunktion bestimmbar ist.

8. Vorrichtung nach einem der vorgenannten Ansprüche, **dadurch gekennzeichnet, dass** als Kontrollgröße ($G_K$) die Fläche zwischen einer das Vorsatzgerät darstellenden Funktion ($V(x)$) und der Kontrollfunktion ($K(x)$) durch die Auswerteeinheit bestimmbar ist.

9. Vorrichtung nach einem der vorgenannten Ansprüche, **dadurch gekennzeichnet, dass** in der Auswerteeinheit eine Bestimmung der Kontrollgröße ($G_K$) durch Integration der Kontrollfunktion ($K(x)$) vorgesehen ist.

10. Vorrichtung nach einem der vorgenannten Ansprüche, **dadurch gekennzeichnet, dass** die Kontrollfunktion zweidimensional abhängig von den Ortskoordinaten der Sensoren ist.

11. Vorrichtung nach einem der vorgenannten Ansprüche, **dadurch gekennzeichnet, dass** eine Minimierung der Kontrollgröße ($G_K$) vorgesehen ist.

12. Vorrichtung nach einem der vorgenannten Ansprüche, **dadurch gekennzeichnet, dass** die Steuerung der Lage des Vorsatzgerätes auf eine berechnete Soll-Vorsatzgerade vorgesehen ist.

13. Vorrichtung nach einem der vorgenannten Ansprüche, **dadurch gekennzeichnet, dass** eine von der Höhenverstellung des Vorsatzgerätes getrennte Neigungsverstellung längs der Fahrtrichtung der landwirtschaftlichen Maschine vorgesehen ist.

14. Vorrichtung nach einem der vorgenannten Ansprüche, **dadurch gekennzeichnet, dass** eine Regelung und/oder Steuerung der Neigungsverstellung längs der Fahrtrichtung vorgesehen ist.

15. Vorrichtung nach einem der vorgenannten Ansprüche, **dadurch gekennzeichnet, dass** die Kontrolleinheit zur Regelung und/oder Steuerung der Lageeinstellung des Vorsatzgerätes einer separaten Kontrolleinheit der landwirtschaftlichen Maschine vorgeschaltet ist.

16. Vorrichtung nach einem der vorgenannten Ansprüche, **dadurch gekennzeichnet, dass** zwischen der Kontrolleinheit des Vorsatzgerätes und der Kontrolleinheit der landwirtschaftlichen Maschine die Übergabe lediglich von zwei Werten für die Querneigung des Vorsatzgerätes vorgesehen ist.

17. Verfahren zur Lageregelung eines Vorsatzgerätes einer landwirtschaftlichen Maschine zur Anpassung an die Bodenkontur, insbesondere für das Mähwerk einer Erntemaschine, wobei über Abstandssensoren der Abstand zum Boden erfasst und eine Neigungseinstellung des Vorsatzgerätes quer zur Fahrtrichtung geregelt wird, **dadurch gekennzeichnet, dass** eine Vorrichtung nach einem der vorgenannten Ansprüche verwendet wird.

## Claims

1. Device for controlling the position of an attachment device of an agricultural machine for adjusting to the contour of the ground, in particular for the mowing unit of a harvesting machine, whereby the distance from the ground is detected by range sensors and there is a controlled setting of the inclination of the attachment device perpendicular to the travelling direction, whereby at least three range sensors are provided, which are arranged distributed over the width of the attachment device, **characterised in that** an evaluation unit is provided for evaluating the sensor signals, which is configured to determine a control variable ($G_K$) by means of a control function ($K(x)$) dependent on the measured ground distance values.

2. Device according to one of the preceding claims, **characterised in that** by means of the evaluation unit the control function ($K(x)$) can be determined as a mathematical function of the ground distance dependent on the sensor position.

3. Device according to one of the preceding claims, **characterised in that** by means of the evaluation unit the control function ($K(x)$) can be determined by an interpolation with the position and ground distance values of the sensors as interpolation point.

4. Device according to one of the preceding claims, **characterised in that** a linear interpolation is provided.

5. Device according to one of the preceding claims, **characterised in that** a polynomial and/or spline interpolation is provided.

6. Device according to one of the preceding claims, **characterised in that** a one-dimensional control function ($K(x)$) is provided as a function of the distance between the sensors.

7. Device according to one of the preceding claims, **characterised in that** as a control variable ($G_k$) the area below the control function can be determined.

8. Device according to one of the preceding claims, **characterised in that** as a control variable ($G_k$) the area between a function ($V(x)$ representing the attachment device and the control function ($K(x)$) can be determined by the evaluation unit.

9. Device according to one of the preceding claims, **characterised in that** in the evaluation unit the control variable ($G_k$) is determined by integration of the control function ($K(x)$).

10. Device according to one of the preceding claims, **characterised in that** the control function is two-dimensionally dependent on the position coordinates of the sensors.

11. Device according to one of the preceding claims, **characterised in that** there is a minimisation of the control variable ($G_k$).

12. Device according to one of the preceding claims, **characterised in that** the control of the position of the attachment device is provided on a calculated reference attachment line.

13. Device according to one of the preceding claims, **characterised in that** there is an inclination adjustment separated from the height adjustment of the attachment device along the travelling direction of the agricultural machine.

14. Device according to one of the preceding claims, **characterised in that** there is a control and/or regulation of the inclination adjustment along the travelling direction.

15. Device according to one of the preceding claims, **characterised in that** the control unit for regulating and/or controlling the position adjustment of the attachment device is arranged upstream of a separate control unit of the agricultural machine.

16. Device according to one of the preceding claims, **characterised in that** between the control unit of the attachment device and the control unit of the agricultural machine the transfer is performed simply by two values for the transverse inclination of the attachment device.

17. Method for controlling the position of an attachment device of an agricultural machine for adjusting to the contour of the ground, in particular for the mowing unit of a harvesting machine, whereby by means of range sensors the distance from the ground is determined and an inclination adjustment of the attachment device perpendicular to the travelling direction is controlled, **characterised in that** a device according to one of the preceding claims is used.

## Revendications

1. Dispositif destiné à régler la position d'un appareil adaptable d'une machine agricole pour l'adaptation au profil de sol, notamment pour la barre de coupe d'une moissonneuse, la distance au sol étant détectée par des capteurs de distance et un réglage d'inclinaison contrôlé de l'appareil adaptable étant prévu transversalement au sens de la marche, au moins trois capteurs de distance étant prévus, lesquels sont répartis sur la largeur de l'appareil adaptable, **caractérisé en ce qu'**une unité d'analyse est prévue afin d'analyser les signaux de capteurs, laquelle unité est réalisée afin de déterminer une grandeur de contrôle ($G_K$) au moyen d'une fonction de contrôle ($K(x)$) dépendant des valeurs de distance au sol mesurées.

2. Dispositif selon la revendication 1,
**caractérisé en ce que,** par l'unité d'analyse, la fonction de contrôle ($K(x)$) peut être déterminée en tant que fonction mathématique de la distance au sol selon la localisation du capteur.

3. Dispositif selon l'une des revendications précédentes,
**caractérisé en ce que,** par l'unité d'analyse, la fonction de contrôle ($K(x)$) peut être déterminée par une interpolation avec les valeurs de distance au sol et de localisation des capteurs en tant que point de support.

4. Dispositif selon l'une des revendications précédentes,
**caractérisé en ce qu'**il est prévu une interpolation linéaire.

5. Dispositif selon l'une des revendications précédentes,
**caractérisé en ce qu'**il est prévu une interpolation polynomiale et/ou spline.

6. Dispositif selon l'une des revendications précédentes,
**caractérisé en ce qu'**il est prévu une fonction de contrôle ($K(x)$) unidimensionnelle dépendant de l'écart entre les capteurs.

7. Dispositif selon l'une des revendications précédentes,
**caractérisé en ce que** la surface située en dessous de la fonction de contrôle peut être déterminée en tant que grandeur de contrôle ($G_K$).

8. Dispositif selon l'une des revendications précédentes,
**caractérisé en ce que** la surface située entre une fonction ($V(x)$) représentant l'appareil adaptable et la fonction de contrôle ($K(x)$) peut être déterminée en tant que grandeur de contrôle ($G_K$) par l'unité d'analyse.

9. Dispositif selon l'une des revendications précédentes,
**caractérisé en ce que,** dans l'unité d'analyse, il est prévu une détermination de la grandeur de contrôle ($G_K$) par intégration de la fonction de contrôle ($K(x)$).

10. Dispositif selon l'une des revendications précédentes,
**caractérisé en ce que** la fonction de contrôle dépend des coordonnées de localisation des capteurs de façon bidimensionnelle.

**11.** Dispositif selon l'une des revendications précédentes,
**caractérisé en ce qu'**il est prévu une minimisation de la grandeur de contrôle ($G_K$).

**12.** Dispositif selon l'une des revendications précédentes,
**caractérisé en ce que** la commande de la position de l'appareil adaptable est prévue sur une droite additionnelle théorique calculée.

**13.** Dispositif selon l'une des revendications précédentes,
**caractérisé en ce qu'**il est prévu un réglage d'inclinaison longitudinalement au sens de la marche de la machine agricole séparé du réglage de hauteur de l'appareil adaptable.

**14.** Dispositif selon l'une des revendications précédentes,
**caractérisé en ce qu'**il est prévu une régulation et/ou une commande du réglage d'inclinaison longitudinalement au sens de la marche.

**15.** Dispositif selon l'une des revendications précédentes,
**caractérisé en ce que** l'unité de contrôle destinée à la régulation et/ou à la commande du réglage de position de l'appareil adaptable est raccordée en amont d'une unité de contrôle de machine agricole séparée.

**16.** Dispositif selon l'une des revendications précédentes,
**caractérisé en ce qu'**il est prévu entre l'unité de contrôle de l'appareil adaptable et l'unité de contrôle de la machine agricole uniquement le transfert de deux valeurs pour l'inclinaison transversale de l'appareil adaptable.

**17.** Procédé destiné au réglage de position d'un appareil adaptable d'une machine agricole pour l'adaptation au profil de sol, notamment pour la barre de coupe d'une moissonneuse, la distance au sol étant détectée par des capteurs de distance et un réglage d'inclinaison de l'appareil adaptable étant effectué transversalement au sens de la marche,
**caractérisé en ce qu'**un dispositif selon l'une des revendications précédentes est utilisé.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3731420
- DE 3807610